# EUROPÄISCHE PATENTANMELDUNG

(11) **EP 4 332 803 A1**
(43) Veröffentlichungstag der Anmeldung: **06.03.2024**
(21) Anmeldenummer: 22200950.8
(22) Anmeldetag: 11.10.2022
(51) Int. Cl.: G06F 21/55, G06F 21/62, H04L 9/40

(54) **VERFAHREN ZUR ERKENNUNG EINES UNBERECHTIGTEN ZUGRIFFS AUF NUTZDATEN IN EINEM CLOUDSPEICHER**

(30) Priorität: 31.08.2022 EP 22193256
(71) Anmelder: Siemens Aktiengesellschaft, 80333 München (DE)
(72) Erfinder: Fusenig, Volker, 54296 Trier (DE)
(74) Vertreter: Siemens Patent Attorneys

(57) **Zusammenfassung**

Vorrichtung und Verfahren zur Erkennung eines unberechtigten Zugriffs auf Nutzdaten eines Nutzers, die auf einem von einem Cloudprovider bereitgestellten Cloudspeicher (22, 32) gespeichert und mit einem kryptographischen Schlüssel verschlüsselt sind, mit den Schritten:
- Speichern (S1) einer Vielzahl von Datenelementen von Dummy-Daten zusätzlich zu Datenelementen der Nutzdaten auf dem bereitgestellten Cloudspeicher (22, 32), wobei auf die Dummy-Daten zu keiner Zeit von einem berechtigten Nutzer auf die Dummy-Daten zugegriffen wird,
- Erzeugen (S2) eines Daten-Logeintrags bei jedem Zugriff auf mindestens ein Datenelement der Nutzdaten und/oder der Dummy-Daten, enthaltend das mindestens eine zugegriffene Datenelement,
- Überprüfen (S3) des in dem Daten-Logeintrag enthaltenen mindestens einen zugegriffenen Datenelements gegenüber den Datenelementen der Dummy-Daten, und
- Veranlassen (S4) einer Maßnahme, wenn das zugegriffene Datenelement mit mindestens einem Datenelement der Dummy-Daten übereinstimmt.

## Beschreibung

Die Erfindung betrifft Verfahren zur Erkennung eines unberechtigten Zugriffs auf Nutzdaten eines Nutzers, die auf einem von einem Cloudprovider bereitgestellten Cloudspeicher gespeichert und mit einem kryptographischen Schlüssel verschlüsselt sind.

Eine Rechnerwolke oder Datenwolke, auch als Cloud Computing oder kurz Cloud bezeichnet, beschreibt ein Modell, das bei Bedarf - meist über das Internet und geräteunabhängig geteilte Computerressourcen als Dienstleistung, etwa in Form von Servern, Datenspeicher oder Applikationen, bereitstellt und nach Nutzung abrechnet. Angebot und Nutzung dieser Computerressourcen ist definiert und erfolgt in der Regel über eine Programmierschnittstelle (API) bzw. für Anwender über eine Website oder Applikation.

Als File Hosting wird eine Online-Dateiablage bezeichnet, die es Nutzern erlaubt, Dateien über das Internet oder ein Unternehmensnetzwerk auf einem zentralen Datenspeicher abzulegen und über einen Client oder via Webbrowser darauf zuzugreifen. Lassen sich die Dateien auch mit anderen Personen teilen, so spricht man auch von Sharehostern bzw. Filesharing.

Es ist ein Block-Storage - Speicherdienst bekannt, bei dem ein Cloud Provider Cloudspeicher in Form von Datenblöcke anbietet und diese auch verwaltet. Üblicherweise kann über eine API auf einen solchen Dienst bzw. die Daten im Block-Storage zugegriffen und Funktionen zum Hoch- und Runterladen, insbesondere Schreiben/Lesen/Löschen von Daten ausgeführt werden. Um den Zugriff auf die Daten zu beschränken, sind die Daten üblicherweise verschlüsselt abgespeichert.

Bei der Nutzung solcher Cloudspeicher kann sich der Nutzer kaum vor Zugriffen eines Cloud Providers auf eigene Daten schützen. Der Cloud Provider ist dabei ein Bereitsteller des Cloudspeichers. Sobald Daten in der Cloud auch verarbeitet werden, müssen diese zumindest für kurze Zeit unverschlüsselt in der Cloud vorliegen. In der Regel wird sogar eine Schlüsselverwaltung für die gespeicherten Daten vom Cloud Provider selbst durchgeführt. Der Cloud Provider hat also jederzeit Zugriff auf die verschlüsselten Daten und die zugehörigen Schlüssel. Der Cloud Provider bzw. der Cloud Provider im Auftrag eines staatlichen Akteurs kann jederzeit auf diese Daten zugreifen, ohne dass der Cloud Nutzer dies erkennen kann.

Bisherige Verfahren zielen in der Regel auf die Erkennung von Zugriffsanomalien über Zugriffsprotokolle ab. Typische Angreifer, die sich Zugang zu den Daten in der Cloud verschafft haben, können so erkannt werden. Der Cloud Provider dagegen hat direkten Zugriff auf das Management des Datenspeicher (z.B. Service S3 bei AWS) und kann beliebig die Zugriffsprotokolle darauf manipulieren. Eigene Zugriffe auf Kundendaten kann er also verschleiern. Wenn der Cloud Provider auch für die Schlüsselverwaltung zuständig ist, kann er zusätzlich die Zugriffs-Logs auf das Schlüsselmaterial beliebig manipulieren und auch hier Spuren seines Zugriffs entfernen.

Es ist somit eine Aufgabe der vorliegenden Erfindung, einen unberechtigten Zugriff auf Daten, die in eine von einem Cloud Provider bereitgestellten Speicher gespeichert sind, zuverlässig zu erkennen, um Gegenmaßnahmen ergreifen zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Erkennung eines unberechtigten Zugriffs auf Nutzdaten eines Nutzers, die auf einem von einem Cloudprovider bereitgestellten Cloudspeicher gespeichert und mit einem kryptographischen Schlüssel verschlüsselt sind, mit den Schritten:
- Speichern einer Vielzahl von Datenelementen von Dummy-Daten zusätzlich zu Datenelementen der Nutzdaten auf dem bereitgestellten Cloudspeicher, wobei die Dummy-Daten derart ausgewählt sind, dass zu keiner Zeit von einem berechtigten Nutzer auf die Dummy-Daten zugegriffen wird,
- Erzeugen eines Daten-Logeintrags bei jedem Zugriff auf mindestens ein Datenelement der Nutzdaten und/oder der Dummy-Daten, enthaltend das mindestens eine zugegriffene Datenelement,
- Überprüfen des in dem Daten-Logeintrag enthaltenen mindestens einen zugegriffenen Datenelements gegenüber den Datenelementen der Dummy-Daten, und
- Ausführen einer Maßnahme, wenn das zugegriffene Datenelement mit mindestens einem Datenelement der Dummy-Daten übereinstimmt.

Ein berechtigter Nutzer ist beispielsweise eine oder mehrere zum Zugriff auf die Nutzdaten berechtigte Anwendung, die in der Cloud oder auch außerhalb der Cloud ausgeführt wird. Da auf die Dummy-Daten niemals während des normalen Betriebs der Anwendungen in der Cloud oder von legitimen Nutzern der Nutzdaten außerhalb der Cloud zugegriffen wird, kann somit ein unberechtigter Zugriff auf die Dummy-Daten erkannt werden. "Dummy-Daten, auf die niemals von einem berechtigten Nutzer zugegriffen wird" sind beispielsweise Daten, die in einer zugehörenden Anwendung nicht als mögliches Ziel zum Abrufen vorgesehen sind. Das Hinzufügen von Dummy-Daten erzeugt nur geringe Kosten, da Speicherung von Daten in der Cloud kostengünstig ist. Das Verfahren ist daher leicht und kosteneffizient umzusetzen.

In einer vorteilhaften Ausführungsform umfasst das Verfahren die weiteren Schritte:
- Erzeugen eines Schlüssel-Logeintrags bei einem Zugriff auf eine Schlüsselverwaltungseinrichtung zur Ermittlung des kryptographischen Schlüssels für den Zugriff auf das mindestens eine Datenelement, enthaltend eine Zugreiferkennung der zugreifenden Einheit, und
- Einfügen der Zugreiferkennung in eine Warnnachricht.

Erlangt der unberechtigte Zugreifer den kryptographischen Schlüssel zum Entschlüsseln der Datenelemente durch einen Zugriff auf die Schlüsselverwaltung, so kann der unberechtigte Zugreifer durch den zusätzlichen Schlüssel-Logeintrag und die Zugreiferkennung identifiziert werden.

In einer vorteilhaften Ausführungsform wird die Schlüsselverwaltungseinrichtung vom Cloudprovider des Cloudspeichers gesteuert und/oder verwaltet.

Üblicherweise protokolliert der Cloudprovider als Verwalter die Zugriffe auf die Schlüsselverwaltungseinrichtung. Somit können diese Protokolleinträge als Schlüssel-Logeinträge ohne zusätzlichen Aufwand wiederverwendet werden. Des Weiteren kann der können dadurch Zugriffe, die nicht über eine übliche, vorgesehene Anwendungsschnittstelle (API) auf die Daten erfolgen und für die somit keine Daten-Logeintrag erzeugt wird, erkannt werden.

In einer vorteilhaften Ausführungsform wird die Schlüsselverwaltungseinrichtung von einer dritten Partei, die unabhängig von dem Cloudprovider des Cloudspeichers ist, oder von dem Nutzer bereitgestellt und/oder verwaltet oder die Schlüsselverwaltungseinrichtung wird vor einem Zugriff des Cloudproviders geschützt bereitgestellt.

Somit kann der Cloudprovider selbst nicht unbemerkt auf die Schlüsselverwaltung zugreifen. Unberechtigte Zugriffe des Cloudproviders können erkannt werden.

In einer vorteilhaften Ausführungsform wird der Schlüssel-Logeintrag an einem vom Cloudprovider unabhängigen Ort gespeichert.

Somit können Schlüssel-Logeinträge nicht unbemerkt vom Cloudprovider verändert werden. Der Cloudprovider kann somit seinen unberechtigten Zugriff verschleiern.

In einer vorteilhaften Ausführungsform ist die Anzahl der Datenelemente der Dummy-Daten mindestens gleich groß wie die Anzahl der Datenelemente der Nutzdaten.

Durch den hohen Anteil an Dummy-Daten erhöht sich die Wahrscheinlichkeit das bei einem unberechtigten Zugriff auch Dummy-Daten abgegriffen werden. Somit kann der unberechtigte Zugriff kurzfristig erkannt werden.

In einer vorteilhaften Ausführungsform wird der Zugriff auf die Nutzdaten und die Dummy-Daten gesperrt, wenn das zugegriffene Datenelement mit mindestens einem Datenelement der Dummy-Daten übereinstimmt.

In einer vorteilhaften Ausführungsform wird das Sperren entsprechend Berechtigungsregeln des Cloudproviders durchgeführt.

Somit kann ein weiterer unbefugter Zugriff auf die Nutzerdaten insbesondere der Zugriff durch externe Angreifer unterbunden werden.

In einer vorteilhaften Ausführungsform wird der Zugriff auf den kryptographischen Schlüssel in der Schlüsselverwaltungseinrichtung gesperrt.

Dies schützt zusätzlich gegen Zugriffe des Cloudproviders, insbesondere wenn die Schlüsselverwaltungseinrichtung nicht vom Cloudprovider bereitgestellt bzw. verwaltet wird.

In einer vorteilhaften Ausführungsform sind die Datenelemente der Dummy-Daten mit einem zweiten kryptographischen Schlüssel verschlüsselt, und der zweite kryptographische Schlüssel unterschiedlich von dem kryptographischen Schlüssel zum Verschlüsseln der Nutzdaten ist.

Somit ist ein Unberechtigter beim Zugriff auf die Dummy-Daten gezwungen, in der Schlüsselverwaltungseinrichtung den zweiten kryptographischen Schlüssel abzufragen. Dabei wird ein Schlüssellogeintrag mit der Zugreiferkennung erstellt. Somit kann der Unberechtigte erkannt und eine Warnnachricht erstellt werden.

In einer vorteilhaften Ausführungsform wird die Anzahl der Datenelemente der Dummy-Daten abhängig von einer maximalen Anzahl von unberechtigt lesbaren Datenelementen ermittelt, wobei die maximale Anzahl vom Nutzer vorgebbar ist.

Somit kann die Anzahl der Dummy-Daten flexibel in Abhängigkeit vom Schutzbedürfnis der Nutzdaten bzw. den Vorgaben des Nutzers bestimmt werden.

In einer vorteilhaften Ausführungsform werden die Datenelemente der Dummy-Daten entsprechend der ermittelten Anzahl automatisch erzeugt und abgespeichert.

Dies ermöglicht eine einfache Handhabung und Nutzung des Verfahrens.

Gemäß einem zweiten Aspekt betrifft die Erfindung eine Vorrichtung zur Erkennung eines unberechtigten Zugriffs auf Daten eines Nutzers, die auf einem von einem Cloudprovider bereitgestellten Cloudspeicher gespeichert und mit einem kryptographischen Schlüssel verschlüsselt sind. Die Vorrichtung umfasst:
- eine Datenbereitstellungseinheit, die derart ausgebildet ist, eine Vielzahl von Datenelementen von Dummy-Daten zusätzlich zu Datenelementen der Nutzdaten auf dem bereitgestellten Cloudspeicher zu speichern, wobei die Dummy-Daten derart ausgewählt sind, dass zu keiner Zeit von einer Anwendung des Nutzers auf die Dummy-Daten zugegriffen wird,
- eine Daten-Loggingeinheit, die derart ausgebildet ist, einen Daten-Logeintrag bei jedem Zugriff auf mindestens ein Datenelement der Nutzdaten und/oder der Dummy-Daten, enthaltend das mindestens eine zugegriffene Datenelement zu erzeugen,
- ein Überprüfungseinheit, das derart ausgebildet ist, das in dem Daten-Logeintrag enthaltene mindestens eine zugegriffene Datenelement gegenüber den Datenelementen der Dummy-Daten zu überprüfen, und
- eine Ausführungseinheit, die derart ausgebildet ist, eine Maßnahme zu veranlassen, wenn das zugegriffene Datenelement mit mindestens einem den Dummy-Daten übereinstimmt.

Die Vorrichtung umfasst zusätzlich eine Datenschnittstelle zum Cloudspeicher und/oder zur Schlüsselverwaltungseinrichtung, um die Dummy-Daten an den bereitgestellten Cloudspeicher zu übergeben und die Daten-Loggingeinträge vom Cloudspeicher bzw. die Schlüssel-Loggingeinträge von der Schlüsselverwaltungseinrichtung zu empfangen.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "speichern", "erzeugen", "überprüfen", "senden" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Die Vorrichtung und darin optional enthaltene Komponenten, wie beispielsweise die Datenbereitstellungseinheit, Daten-Loggingeinheit, Überprüfungseinheit, Ausgabeeinheit und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Die Einheiten der Vorrichtung können als HW, Firmware oder als Software oder einer Kombination daraus ausgebildet sein.

Ein Computerprogrammprodukt, wie z. B. ein Computerprogrammmittel, kann beispielsweise als Speichermedium, wie zum Beispiel einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Verfahrens als Ablaufdiagramm;
- Fig. 2: ein erstes Ausführungsbeispiel der erfindungsgemäßen Vorrichtung in schematischer Darstellung; und
- Fig. 3: ein Anwendungsszenario des erfindungsgemäßen Verfahrens bzw. der erfindungsgemäßen Vorrichtung mit einer Schlüsselverwaltungseinrichtung innerhalb einer Cloud.
- Fig. 4: ein Anwendungsszenario des erfindungsgemäßen Verfahrens bzw. der erfindungsgemäßen Vorrichtung mit einer Schlüsselverwaltungseinrichtung außerhalb der Cloud.

Einander entsprechende Teile sind in allen Figuren mit den gleichen Bezugszeichen versehen.

Im Weiteren wird ein in einer Rechnerwolke bzw. via Cloud Computing, File Hosting oder ähnlichem bereitgestellter Datenspeicher als Cloudspeicher bezeichnet.

Einem Nutzer der Cloud wird ein Cloudspeicher vom Cloudprovider zur Speicherung von Daten bereitgestellt. Um den Zugriff auf die Daten zu beschränken, sind die Daten üblicherweise durch einen kryptographischen Schlüssel verschlüsselt abgespeichert. Ein legitimer Nutzer des Cloudspeichers kann mittels des kryptographischen Schlüssels die im Cloudspeicher gespeicherten Daten entschlüsseln und diese nutzen. Die kryptographischen Schlüssel werden durch eine Schlüsselverwaltungseinrichtung verwaltet.

Bisherige Verfahren versuchen unerlaubte Zugriffe auf Daten durch eine Erkennung von Zugriffsanomalien zu identifizieren. Typische Angreifer, die sich Zugang zu den Daten auf dem Cloudspeicher verschafft haben, können so erkannt werden. Der Cloud Provider dagegen hat direkten Zugriff auf das Management des Cloudspeichers und kann beliebig Protokolleinträge, auch als Zugriffs-Logs bezeichnet, die üblicherweise beim Zugriff auf Daten erstellt werden, manipulieren. Eigene Zugriffe auf Kundendaten kann der Cloudprovider also verschleiern. Wenn der Cloud Provider auch für die Schlüsselverwaltung zuständig ist, kann er zusätzlich die Zugriffs-Logs auf das Schlüsselmaterial beliebig manipulieren und auch hier Spuren seines Zugriffs entfernen. Der Cloud Provider kann auch direkt auf das Speichermedium zugreifen und dort die Daten lesen. Dabei entstehen in der Regel keine Log-Einträge. Die werden nur erstellt, wenn über die API zugegriffen wird.

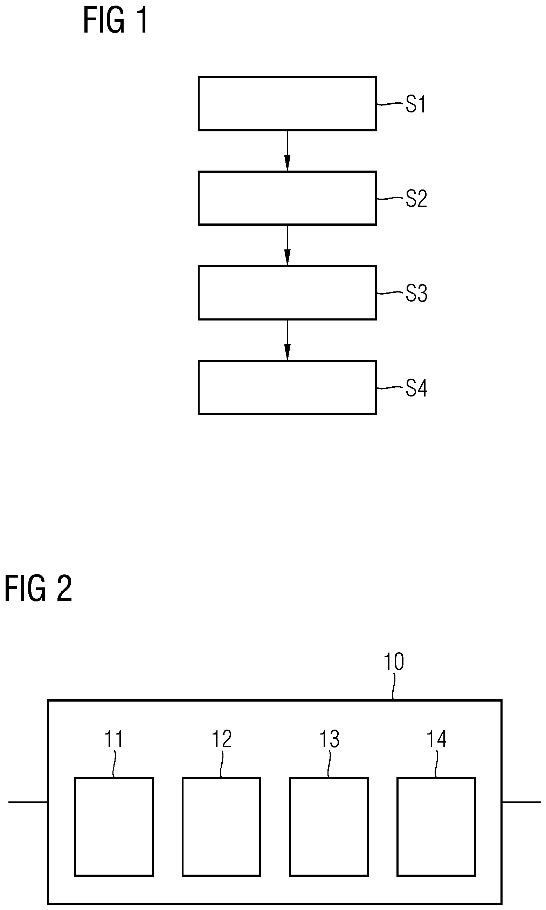

Das erfindungsgemäße Verfahren wird nun anhand des Ablaufdiagramms in Fig. 1 näher erläutert.

Um einen unberechtigten Zugriff auf Daten eines Nutzers zuverlässig zu erkennen, werden erfindungsgemäß Dummy-Daten im Cloudspeicher verschlüsselt gespeichert, auf die nie legitim zugegriffen werden muss. Zur Unterscheidung von den Dummy-Daten werden die eigentlichen Daten des Nutzers als Nutzdaten bezeichnet. Dazu werden eine Vielzahl von Datenelementen von Dummy-Daten zusätzlich zu Datenelementen der Nutzdaten auf dem bereitgestellten Cloudspeicher abgespeichert, siehe Verfahrensschritt S1. Die Dummy Daten sind derart ausgewählt, dass niemals während des normalen Betriebs einer Anwendung in der Cloud oder von legitimen Nutzern außerhalb der Cloud darauf zugegriffen wird. Dummy-Daten sind beispielsweise Bilder, die nie angezeigt werden, beziehungsweise zu denen es keinen Aufruf in einem Anwendungsprogramm gibt, das auf den Datenspeicher zugreift.

Im Verfahrensschritt S2 wird bei einem Zugriff auf mindestens ein Datenelement der Nutzdaten und/oder der Dummy-Daten ein Daten-Logeintrag erzeugt, der das mindestens eine Datenelement, auf das zugegriffen wurde enthält. Im Daten-Logeintrag sind somit alle Datenelement oder eine eindeutige Repräsentation der Datenelement auf die zugegriffen wurde enthalten. Bevorzugterweise wird bei jedem Zugriff auf ein Datenelement ein Datenlogeintrag erstellt. Um den Verarbeitungsaufwand und/oder die Speicherkapazität für das Erstellen und Speichern der Datenlogeinträge zu optimieren, kann ein Datenlogeintrag in einem vorgegebenen zeitlichen Abstand oder nach einer vorgegebenen Anzahl von Zugriffen erzeugt werden.

Anschließend werden die im Datenlogeintrag enthaltenen Datenelemente oder deren Repräsentation gegenüber den Datenelementen der Dummy-Daten überprüft, siehe Verfahrensschritt S3. Eine Repräsentation des Datenelements kann ein eindeutiger Datenkenner, beispielsweise der Pfadname, unter dem das Datenelement im Cloud-Speicher abgespeichert ist, sein. Entsprechend wird der eindeutige Datenkenner des Datenelements, auf das zugegriffen wurde und der in dem Logeintrag enthalten ist, mit dem eindeutigen Datenkenner von jedem Datenelement der Dummy-Daten verglichen. Bei der Erstellung der Datenelemente der Dummy-Daten wird eine Liste der eindeutigen Datenkenner der Dummy-Datenelemente erzeugt. Wenn das zugegriffene Datenelement mit mindestens einem Datenelement der Dummy-Daten übereinstimmt, wird eine Warnnachricht an den Nutzer gesendet, siehe Verfahrensschritt S4.

Wenn auf diese Dummy-Daten zugegriffen wird, kann man von einem unautorisierten Zugriff ausgehen. Der Nutzer kann basierend auf der Warnnachricht weiterer Maßnahmen ergreifen, insbesondere um einen weiteren Zugriff auf die Nutzerdaten durch den Nichtberechtigten zu unterbinden.

Um die Gefahr zu minimieren, dass ein Angreifer viele Daten exfiltrieren, das heißt zugreifen und unbemerkt auslesen, kann, bevor der Angriff erkannt wird, werden viele Dummy-Daten hinzugefügt. Bevorzugt ist die Anzahl der Datenelemente der Dummy-Daten mindestens gleich groß wie die Anzahl der Datenelemente der Nutzdaten. Dadurch wird theoretisch bei jedem zweiten Zugriff auf den Datenspeicher ein Datenelement der Dummy-Daten getroffen und exfiltriert. Somit wird ein unerlaubter Zugriff mit einer Wahrscheinlichkeit von 0,5 erkannt. Abhängig von dem Schutzbedürfnis der Nutzdaten kann der Anteil der Dummy-Daten zu den Nutzerdaten erhöht werden. Somit erhöht sich die Wahrscheinlichkeit, dass bereits bei einem ersten unerlaubten Zugriff ein Datenelement der Dummy-Daten ausgeschleust wird und somit der Zugriff und/oder der Angreifer erkannt wird. Das Hinzufügen von Dummy Daten erzeugt nur geringe Kosten, da Speicherung von Daten in der Cloud kostengünstig ist. Das Verfahren ist daher leicht und kosteneffizient umzusetzen. Man kann also den Anteil der Dummy Daten so weit erhöhen, dass die Anzahl der unautorisiert zugegriffenen Daten akzeptabel ist.

Alternativ kann die Anzahl der Datenelemente der Dummy-Daten abhängig von einer maximalen Anzahl von unberechtigt lesbaren Datenelementen ermittelt werden, wobei die maximale Anzahl vom Nutzer vorgebbar ist. Aus der vorgegebenen maximalen Anzahl kann über eine einfache Wahrscheinlichkeitsbetrachtung die Anzahl der Datenelemente der Dummy-Daten berechnet werden. Beispielsweise kann bei einer maximalen Anzahl von 3 unberechtigt lesbaren Nutzdaten, jedes vierte Datenelement ein Dummy-Datenelement sein und somit die Anzahl der Dummy-Datenelemente einem Viertel der Anzahl der Nutzdatenelemente entsprechen.

Vorteilhafterweise wird die ermittelte Anzahl von der Dummy-Datenelementen der automatisch erzeugt und abgespeichert. In einer Variante wird zusätzlich ein Schlüssel-Logeintrag bei einem Zugriff auf eine Schlüsselverwaltungseinrichtung zur Ermittlung des kryptographischen Schlüssels für den Zugriff auf das mindestens eine Datenelement erzeugt. Der Schlüssel-Logeintrag enthält eine Zugreiferkennung der zugreifenden Einheit. Die Zugreiferkennung wird in die Warnmeldung an den Nutzer eingefügt. Die Zugreiferkennung erleichtert eine Identifizierung des Zugreifers, bei einem unerlaubten Zugriff somit der Angreifer. Beispielsweise kann eine IP-Adresse des Zugreifenden als Zugreiferkennung in den Schlüssel-Logeintrag eingetragen werden. Ein Nutzer muss sich gegenüber der Schlüsselverwaltungseinrichtung 24 authentisieren und auf Basis der Identität des Nutzers bzw. des Zugreifenden werden die Berechtigungen auf die kryptographischen Schlüsseldefiniert. Ein Angreifer muss also als legitimer Nutzer auf die Schlüsselverwaltung zugreifen und sich korrekt authentisieren können. Der Cloud Provider könnte z.B. die Zugriffsdaten des legitimen Cloud Nutzers verwenden. Im Zugriffslogeintrag kann man also nicht direkt den Angreifer erkennen, sondern nur über welchen legitimen Nutzer er zugreift. Die IP-Adresse könnte man natürlich zusätzlich erfassen, um ggf. mehr über einen Angreifer ausfindig zu machen.

Wenn ein unautorisierter Zugriff erkannt wird, können mehrere Maßnahmen als Reaktionen veranlasst werden. So kann der unerlaubte Zugriff gemeldet werden. Beispielsweise wird eine Warnnachricht an den Nutzer gesendet. Eine weitere Maßnahme ist eine Sperrung des Zugriffs auf alle Daten über ein Berechtigungskonzept des Cloud Providers. Dies schützt insbesondere vor externen Angreifern. Eine weitere Maßnahme ist eine Sperrung des Zugriffs auf das Schlüsselmaterial, insbesondere den kryptographischen Schlüssel für den Datenspeicher, in der Schlüsselverwaltungseinrichtung. Dies schützt zusätzlich gegen Zugriffe des Cloud Providers.

In Fig. 2 ist eine Vorrichtung dargestellt, die derart ausgebildet ist, die beschriebenen Verfahrensschritte auszuführen.

Die Vorrichtung 10 umfasst eine Datenbereitstellungseinheit 11, eine Daten-Loggingeinheit 12, eine Überprüfungseinheit 13 sowie eine Ausführungseinheit 14. Die einzelnen Einheiten 11-14 können räumlich verteilt angeordnet sein und zumindest teilweise in der Cloud ausgeführt werden. In einer Variante sind die Einheiten 11-14 in einer physischen Einheit integriert.

Die Datenbereitstellungseinheit 11 ist derart ausgebildet, eine Vielzahl von Datenelementen von Dummy-Daten zusätzlich zu Datenelementen der Nutzdaten auf dem bereitgestellten Cloudspeicher zu speichern, wobei die Dummy-Daten derart ausgewählt sind, dass zu keiner Zeit von einem berechtigten Nutzer auf die Dummy-Daten zugegriffen wird. Die Datenbereitstellungeinheit 11 kann insbesondere als ein Nutzer verwaltet sein, der berechtigt ist Daten an den Datenspeicher zur Speicherung zu übergeben.

Die Daten-Loggingeinheit 12 ist derart ausgebildet, einen Daten-Logeintrag bei einem Zugriff auf mindestens ein Datenelement der Nutzdaten und/oder der Dummy-Daten zu erzeugen, und das mindestens eine zugegriffene Datenelement in den Daten-Logeintrag einzutragen. Ist bereits ein entsprechender Protokolleintrag für einen Zugriff auf das Datenelement vorhanden, so wird dieser als Basis für den Datenlogeintrag verwendet und als Datenlogeintrag an die Überprüfungseinheit 13 bereitgestellt.

Die Überprüfungseinheit 13 ist derart ausgebildet, dass in dem Daten-Logeintrag enthaltene mindestens eine zugegriffene Datenelement gegenüber den Datenelementen der Dummy-Daten zu überprüfen. Die Ausführungseinheit 14 ist derart ausgebildet, eine Maßnahme zu veranlassen, wenn das zugegriffene Datenelement mit mindestens einem den Dummy-Daten übereinstimmt.

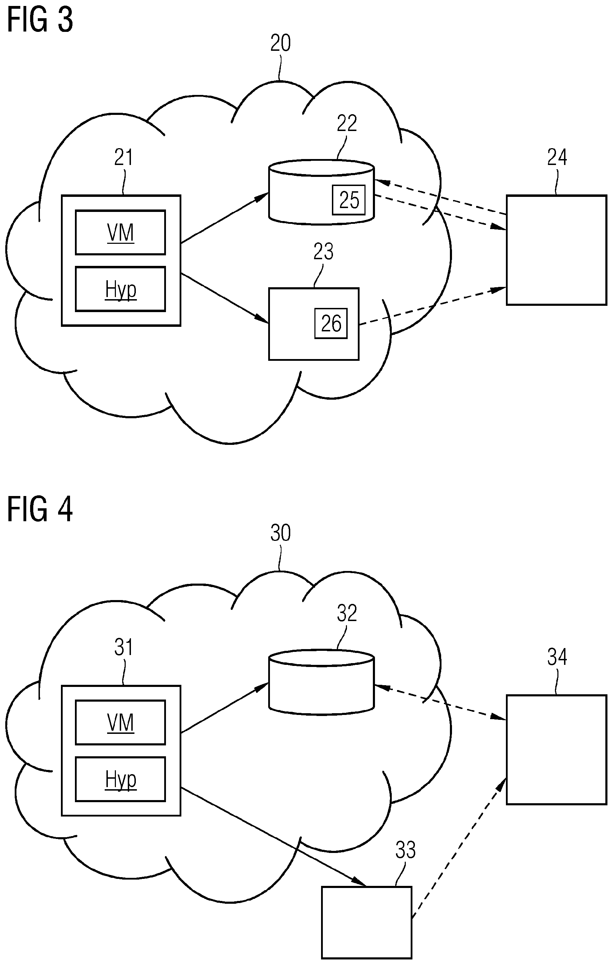

Fig.3 zeigt ein Ausführungsbeispiel der erfindungsgemäßen Vorrichtung 24 in einem Szenario, in dem ein Cloudspeicher 22 und eine Schlüsselverwaltungseinrichtung 23 durch einen Cloudprovider einer Cloud 20 bereitgestellt bzw. gesteuert und verwaltet werden.

Eine Recheninstanz 21 umfasst beispielsweise einen Hypervisor Hyp der eine Virtuelle Maschine VM steuert. Auf der Virtuellen Maschine VM wird eine Anwendung ausgeführt, die eine Berechtigung für den Zugriff auf die Nutzdaten im Datenspeicher 22 aufweist. Die Anwendung ist ein berechtigter Nutzer des Datenspeichers 24. Um auf die Daten im Datenspeicher zuzugreifen, fordert die Anwendung den kryptographischen Schlüssel, mit dem die Daten auf dem Cloudspeicher 22 verschlüsselt sind, bei der Schlüsselverwaltungseinrichtung 23 an und kann damit die Daten auf dem Datenspeicher 22 abrufen und entschlüsseln.

Die Datenbereitstellungseinheit der Vorrichtung 24 hat Dummy-Daten erzeugt und auf dem Cloudspeicher 22 verschlüsselt abgespeichert, siehe gestrichelte Linie in Fig. 3. Die Daten-Loggingeinheit der Vorrichtung 24 erzeugt einen Datenlogeintrag und optional zusätzlich einen Schlüssellogeintrag, beispielsweise durch SW-Agenten 25, 26. Der Daten- und optional der Speicher-Logeintrag werden in der Vorrichtung 24 empfangen und die enthaltenen zugegriffenen Datenelemente mit den Dummy-Daten verglichen und ein unberechtigter Zugriff erkannt.

In einer Ausführungsvariante sind die Dummy-Daten und die Nutzdaten mit unterschiedlichen kryptographischen Schlüsseln geschützt. Dadurch wird bei einem Zugriff auf die Dummy-Daten eine Anfrage des Angreifers bei der Schlüsselverwaltungseinrichtung 23 erzwungen, um die kryptographischen Schlüssel für die Dummy-Daten zu erlangen. Der Zugriff auf die Schlüsselverwaltungseinrichtung 23 wird mit einem Schlüssel-Logeintrag protokolliert und die Zugreiferkennung, hier die Kennung des Angreifers, darin eingetragen.

Ein Angreifer kann beispielsweise unbefugt einen Berechtigungsnachweis für einen Zugriff auf den Cloudspeicher 22 des Nutzers erlangt haben oder Zugriff auf die Recheninstanz 21 erlangt haben, die Rechte für einen Zugriff auf die Daten bzw. den Cloudspeicher 22 besitzt. Durch den Schlüssel-Logeintrag kann insbesondere ein externer Angreifer identifiziert werden.

Es kann aber auch der Cloud Provider selbst unbefugt auf die Daten zugegriffen haben. Fig.4 zeigt ein Ausführungsbeispiel der erfindungsgemäßen Vorrichtung 34 in einem Szenario, in dem eine Schlüsselverwaltungseinrichtung 33 außerhalb der Cloud bzw. nicht durch den Cloudprovider gesteuert und/oder verwaltet wird.

Die Schlüsselverwaltungsvorrichtung 33 kann von einer anderen Partei als dem Cloud Provider durchgeführt werden. Die Schlüsselverwaltungsvorrichtung 33 beispielsweise durch ein vom Cloudprovider bereitgestelltes Hardwaresicherheitsmodul, auch Cloud-HSM genannt, bereitgestellt werden. Die Schlüsselverwaltungseinrichtung 33 kann aber auch durch eine Einrichtung beim Nutzer, auch als On-Premise bezeichnet, bereitgestellt werden. Um Daten in der Cloud entschlüsseln zu können, benötig eine Instanz in der Cloud aber Zugriff auf das Schlüsselmaterial. Durch die Trennung der Schlüsselverwaltungseinrichtung 32 von der Cloud 20 wird also nur der Zugriff auf die kryptographischen Schlüssel erschwert. Wenn ein Angreifer beispielsweise Zugriff auf eine VM in einer Recheninstanz 31 erlangt, die berechtigt ist auf Nutzdaten im Datenspeicher 32 zuzugreifen, kann der Angreifer mit den Berechtigungen der Virtuellen Maschine VM bzw. der darauf ausgeführten Anwendung, auf die Datenelemente im Datenspeicher 32 zugreifen. Ein Cloud Provider hat volle Kontrolle über die Cloud Infrastruktur und damit auch den Hypervisor Hyp und kann somit Zugriff auf VMs erlangen und in ihrem Namen Schlüsselmaterial von der externen Schlüsselverwaltungseinrichtung 33 erfragen.

Hauptvorteil dieser Variante ist aber, dass der Cloud Provider keinen Zugriff auf die Schlüssellogeinträge der Schlüsselverwaltungseinrichtung 33 hat und diese nicht manipulieren kann. Auch wenn die Angriffe nicht direkt verhindert werden können, können auf Basis der manipulationssicheren Schlüssel-logeinträge Anomalien erkannt werden. Durch die Datenlogeinträge können nun auch kompliziertere Angriffe, die Daten über einen langen Zeitraum ausschleusen bzw. exfiltrieren, erkannt werden.

Bei dem vorgestellten Verfahren können Zugriffe auf Dummy Daten mit 100% Sicherheit als unautorisiert eingestuft werden und darauf reagiert werden. Die Akzeptanz von Datenverlusten an den Angreifer kann über die Anzahl der eingeführten Dummy Daten eingestellt werden, so dass mit sehr hoher Wahrscheinlichkeit unautorisierte Zugriffe erkannt werden bevor große Mengen an Daten abgeflossen sind. Erkennungsverfahren, die auf Anomalie-Erkennung beruhen, können in der Regel Angriffe nur ungenügend erkennen, bei denen der Angreifer Daten über einen langen Zeitraum abgreift. Die Zugriffe des Angreifers gehen dann im Rauschen der legitimen Zugriffe unter.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Erkennung eines unberechtigten Zugriffs auf Nutzdaten eines Nutzers, die auf einem von einem Cloudprovider bereitgestellten Cloudspeicher (22, 32) gespeichert und mit einem kryptographischen Schlüssel verschlüsselt sind, mit den Schritten:
- Speichern (S1) einer Vielzahl von Datenelementen von Dummy-Daten zusätzlich zu Datenelementen der Nutzdaten auf dem bereitgestellten Cloudspeicher (22, 32), wobei die Dummy-Daten derart ausgewählt sind, dass zu keiner Zeit von einem berechtigten Nutzer auf die Dummy-Daten zugegriffen wird,
- Erzeugen (S2) eines Daten-Logeintrags bei jedem Zugriff auf mindestens ein Datenelement der Nutzdaten und/oder der Dummy-Daten, enthaltend das mindestens eine zugegriffene Datenelement,
- Überprüfen (S3) des in dem Daten-Logeintrag enthaltenen mindestens einen zugegriffenen Datenelements gegenüber den Datenelementen der Dummy-Daten, und
- Veranlassen (S4) einer Maßnahme, wenn das zugegriffene Datenelement mit mindestens einem Datenelement der Dummy-Daten übereinstimmt.

2. Verfahren nach Anspruch 1, mit den weiteren Schritten:
- Erzeugen eines Schlüssel-Logeintrags bei einem Zugriff auf eine Schlüsselverwaltungseinrichtung (23, 33) zur Ermittlung des kryptographischen Schlüssels für den Zugriff auf das mindestens eine Datenelement, enthaltend eine Zugreiferkennung der zugreifenden Einheit, und
- Einfügen der Zugreiferkennung in eine Warnnachricht.

3. Verfahren nach Anspruch 2, wobei die Schlüsselverwaltungseinrichtung (23) vom Cloudprovider des Cloudspeichers gesteuert und/oder verwaltet wird.

4. Verfahren nach Anspruch 2, wobei die Schlüsselverwaltungseinrichtung von einer dritten Partei, die unabhängig von dem Cloudprovider des Cloudspeichers (33) ist, oder von dem Nutzer gesteuert und/oder verwaltet wird oder die Schlüsselverwaltungseinrichtung (33) vor einem Zugriff des Cloudproviders geschützt bereitgestellt wird.

5. Verfahren nach Anspruch 4, wobei der Schlüssel-Logeintrag an einem vom Cloudprovider unabhängigen Ort gespeichert wird.

6. Verfahren nach einem der vorangehenden Ansprüche, wobei die Anzahl der Datenelemente der Dummy-Daten mindestens gleich groß wie die Anzahl der Datenelemente der Nutzdaten ist.

7. Verfahren nach einem der vorangehenden Ansprüche, wobei als eine Maßnahme der Zugriff auf die Nutzdaten und die Dummy-Daten gesperrt wird, wenn das zugegriffene Datenelement mit mindestens einem Datenelement der Dummy-Daten übereinstimmt.

8. Verfahren nach Anspruch 7, wobei das Sperren entsprechend Berechtigungsregeln des Cloudproviders durchgeführt wird.

9. Verfahren nach einem der vorangehenden Ansprüche, wobei als eine Maßnahme der Zugriff auf den kryptographischen Schlüssel in der Schlüsselverwaltungseinrichtung (23, 33) gesperrt wird.

10. Verfahren nach einem der vorangehenden Ansprüche, wobei jedes der Datenelement durch einen eindeutigen Datenkenner repräsentiert wird.

11. Verfahren nach einem der vorangehenden Ansprüche, wobei die Datenelemente der Dummy-Daten mit einem zweiten kryptographischen Schlüssel verschlüsselt sind, und der zweite kryptographische Schlüssel unterschiedlich von dem kryptographischen Schlüssel zum Verschlüsseln der Nutzdaten ist.

12. Verfahren nach einem der Ansprüche 1 bis 5, wobei die Anzahl der Datenelemente der Dummy-Daten abhängig von einer maximalen Anzahl von unberechtigt lesbaren Datenelementen ermittelt wird, und die maximale Anzahl vom Nutzer vorgebbar ist.

13. Verfahren nach einem der Ansprüche 6 oder 12, wobei die Datenelemente der Dummy-Daten entsprechend der ermittelten Anzahl automatisch erzeugt und abgespeichert werden.

14. Vorrichtung (10, 24, 34) zur Erkennung eines unberechtigten Zugriffs auf Daten eines Nutzers, die auf einem von einem Cloudprovider bereitgestellten Cloudspeicher (22, 32) gespeichert und mit einem kryptographischen Schlüssel verschlüsselt sind, umfassend:
- eine Datenbereitstellungseinheit (11), die derart ausgebildet ist, eine Vielzahl von Datenelementen von Dummy-Daten zusätzlich zu Datenelementen der Nutzdaten auf dem bereitgestellten Cloudspeicher (23, 33) zu speichern, wobei die Dummy-Daten derart ausgewählt sind, dass zu keiner Zeit von einem berechtigten Nutzer auf die Dummy-Daten zugegriffen wird,
- eine Daten-Loggingeinheit (12), die derart ausgebildet ist, einen Daten-Logeintrag bei jedem Zugriff auf mindestens ein Datenelement der Nutzdaten und/oder der Dummy-Daten, enthaltend das mindestens eine zugegriffene Datenelement zu erzeugen,
- ein Überprüfungseinheit (13), das derart ausgebildet ist, das in dem Daten-Logeintrag enthaltene mindestens eine zugegriffene Datenelement gegenüber den Datenelementen der Dummy-Daten zu überprüfen, und
- eine Ausführungseinheit (14), die derart ausgebildet ist, eine Maßnahme zu veranlassen, wenn das zugegriffene Datenelement mit mindestens einem den Dummy-Daten übereinstimmt.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 13 durchzuführen.
